# EUROPÄISCHE PATENTANMELDUNG

(11) **EP 2 944 388 A1**
(43) Veröffentlichungstag der Anmeldung: **18.11.2015**
(21) Anmeldenummer: 14167893.8
(22) Anmeldetag: 12.05.2014
(51) Int. Cl.: B21C 47/24

(54) **Zusammenhalten und Transportieren eines zu einem Coil aufgewickelten Metallbandes**

(71) Anmelder: Siemens VAI Metals Technologies GmbH, 4031 Linz (AT)
(72) Erfinder: Hofer, Roland, 4204 Reichenau im Muehlkreis (AT); Kapl, Harald, 4060 Leonding (AT); Karl, Reinhard, Dr., 3400 Klosterneuburg (AT); Pichler, Lukas, Dr., 39050 Deutschnofen (IT); Salzmann, Christoph, 4040 Linz (AT); Schiefer, Juergen, 3350 Haag (AT); Braterschofsky, Franz, 4102 Goldwoerth (AT); Krimpelstaetter, Konrad, Dr., 4223 Katsdorf (AT); Razinkov, Jurij, 4020 Linz (AT); Strauch, Marco, 4040 Linz (AT)
(74) Vertreter: Maier, Daniel Oliver

(57) **Zusammenfassung**

Die Erfindung betrifft eine Vorrichtung (1) und ein Verfahren zum Zusammenhalten und Transportieren eines zu einem Coil (3) aufgewickelten Metallbandes nach dessen Aufwickeln in einer Haspelstation (5). Die Vorrichtung (1) umfasst einen Bundabzugswagen (20) zum Aufnehmen des Coil (3) in der Haspelstation (5) und Transportieren des Coil (3) aus der Haspelstation (5). Ferner umfasst die Vorrichtung (1) eine Bundsicherungsvorrichtung, die dazu ausgebildet ist, eine Sicherungsschlinge (40) teilumfänglich fest um den Coil (3) zu legen, so dass der Coil (3) mittels der Sicherungsschlinge (40) zusammengehalten und auf den Bundabzugswagen (20) gedrückt wird.

## Beschreibung

Die Erfindung betrifft eine Vorrichtung und ein Verfahren zum Zusammenhalten und Transportieren eines zu einem Coil aufgewickelten Metallbandes nach dessen Aufwickeln in einer Haspelstation.

In Warmwalzanlagen werden vorgewalzte Metallbänder oft zu einem so genannten Coil aufgewickelt. Dabei werden zunehmend Metallbänder hochfester Güten nachgefragt und produziert. Wenn das Eigengewicht eines dicken und hochfesten gewickelten Metallbandes nicht mehr zu dessen Stabilisierung ausreicht, kommt es zum spontanen Aufspringen des Coil. Dabei bauen sich die internen Spannungen ab und der Coil vergrößert seinen Durchmesser. Coils dieser Art sind ein Risikofaktor für Produktion sowie Transport und erfordern eine spezielle Handhabe.

DE 10 2011 080 410 A1 offenbart eine Vorrichtung und ein Verfahren zum Handhaben eines Metallbandes. Die Vorrichtung umfasst eine Haspeleinrichtung mit einem Haspeldorn zum Aufwickeln des Metallbandes zu einem Coil auf dem Haspeldorn und einen Bundausfahrwagen mit Auflagern zum Aufnehmen des Coils von dem Haspeldorn und Ausfahren des Coils aus der Haspeleinrichtung. Um das Metallband in der Haspeleinrichtung bei der Übergabe vom Haspeldorn auf den Bundausfahrwagen sowie während eines Transportes mit dem Bundausfahrwagen zusätzlich zu sichern, ist ein Niederhaltearm zum Ausüben einer Niederhaltekraft auf den äußeren Umfang des Coils zum Drücken des Coils auf die Auflager des Bundausfahrwagens vorgesehen.

Der Erfindung liegt die Aufgabe zugrunde, eine verbesserte Vorrichtung und ein verbessertes Verfahren zum Zusammenhalten und Transportieren eines zu einem Coil aufgewickelten Metallbandes nach dessen Aufwickeln in einer Haspelstation anzugeben.

Die Aufgabe wird erfindungsgemäß hinsichtlich der Vorrichtung durch die Merkmale des Anspruchs 1 und hinsichtlich des Verfahrens durch die Merkmale des Anspruchs 9 gelöst.

Vorteilhafte Ausgestaltungen der Erfindung sind Gegenstand der Unteransprüche.

Eine erfindungsgemäße Vorrichtung zum Zusammenhalten und Transportieren eines zu einem Coil aufgewickelten Metallbandes nach dessen Aufwickeln in einer Haspelstation umfasst einen Bundabzugswagen zum Aufnehmen des Coil in der Haspelstation und Transportieren des Coil aus der Haspelstation. Ferner umfasst die Vorrichtung eine Bundsicherungsvorrichtung, die dazu ausgebildet ist, eine Sicherungsschlinge teilumfänglich fest um den Coil zu legen, so dass der Coil mittels der Sicherungsschlinge zusammengehalten und auf den Bundabzugswagen gedrückt wird.

Die Erfindung sieht also vor, einen Coil mittels einer ihn teilumfänglich umgebenden Sicherungsschlinge zusammenzuhalten und auf einen Bundabzugswagen zu drücken. Die Sicherungsschlinge ermöglicht einen reibungserhöhenden Formschluss durch die umfängliche Umschlingung des Coil und einen optimierten Kraftschluss zwischen Coil, Sicherungsschlinge und Bundabzugswagen, was eine kompakte Bauweise der Bundsicherungsvorrichtung zulässt. Gegenüber aus dem Stand der Technik, beispielsweise aus der DE 10 2011 080 410 A1 bekannten Sicherungsvorrichtungen wird zum Sichern des Coil insbesondere kein aufwändiger massiver Niederhaltearm zum Ausüben einer Niederhaltekraft auf den äußeren Umfang des Coils, beispielsweise beim Binden des Coil, verwendet oder benötigt. Dadurch entfallen auch Einschränkungen an den Coildurchmesser, die sich durch eine Verwendung eines Niederhaltearms ergeben, da die Sicherungsschlinge wesentlich schlanker als ein massiver Niederhaltearm ausgebildet ist. Ferner wird kein komplexes Übergabesystem zur Übergabe des Coil vor oder nach dem Transport des Coil benötigt.

Eine Ausgestaltung der Erfindung sieht vor, dass der Bundabzugswagen wenigstens eine Verankerung für ein Schlingenende der Sicherungsschlinge aufweist.

Dadurch wird der Kraftfluss zum Sichern des Coil vorteilhaft auf den Bundabzugswagen gelenkt, so dass keine weitere diesen Kraftfluss aufnehmende Komponente benötigt wird.

Eine weitere Ausgestaltung der Erfindung sieht vor, dass der Bundabzugswagen wenigstens eine Spannvorrichtung zum Spannen der Sicherungsschlinge aufweist.

Dadurch wird eine Spannvorrichtung zum Spannen der Sicherungsschlinge vorteilhaft in den Bundabzugswagen integriert und auch die Kraft zum Spannen der Sicherungsschlinge wird von dem Bundabzugswagen aufgenommen.

Vorzugsweise weist eine Spannvorrichtung dabei einen Hydraulikzylinder oder eine Winde auf, mittels dessen bzw. mittels derer ein Schlingenende der Sicherungsschlinge zum Spannen der Sicherungsschlinge bewegbar ist.

Ein Hydraulikzylinder und eine Winde sind zum Spannen der Sicherungsschlinge aufgrund der dazu erforderlichen hohen Kräfte besonders geeignet.

Eine weitere Ausgestaltung der Erfindung sieht vor, dass die Bundsicherungsvorrichtung einen Führungsrahmen für die Sicherungsschlinge aufweist.

Ein Führungsrahmen für die Sicherungsschlinge ermöglicht vorteilhaft eine einfache Positionierung und Handhabung der Sicherungsschlinge.

Eine Weitergestaltung der vorgenannten Ausgestaltung der Erfindung sieht wenigstens eine Kopplungseinheit zu einer lösbaren Kopplung des Führungsrahmens an den Bundabzugswagen vor.

Durch eine Kopplung des Führungsrahmens an den Bundabzugswagen entfällt vorteilhaft die Notwendigkeit, die Bewegungen des Führungsrahmens und des Bundabzugswagens bei dem Transport des Coil zu synchronisieren. Die Lösbarkeit der Kopplung ermöglicht die Entkopplung des Führungsrahmens von dem Bundabzugswagen, so dass der Führungsrahmen und der Bundabzugswagen vor und nach dem Transport eines Coil vorteilhaft unabhängig voneinander geeignet positioniert werden können.

Ferner ist der Führungsrahmen vorzugsweise schienengeführt bewegbar.

Eine Schienenführung ermöglicht vorteilhaft eine einfache und präzise Bewegung des Führungsrahmens.

Die Sicherungsschlinge ist vorzugsweise als eine zugbeanspruchte Vorrichtung, insbesondere als ein Stahlband oder eine Kette oder ein beweglicher Mechanismus, ausgebildet.

Bei dem erfindungsgemäßen Verfahren zum Zusammenhalten und Transportieren eines zu einem Coil aufgewickelten Metallbandes nach dessen Aufwickeln in einer Haspelstation wird der Coil in der Haspelstation von einem Bundabzugswagen aufgenommen und mittels des Bundabzugswagens aus der Haspelstation transportiert. Ferner wird eine Sicherungsschlinge teilumfänglich fest um den Coil gelegt, so dass der Coil vor und während des Transports auf dem Bundabzugswagen mittels der Sicherungsschlinge zusammengehalten und auf den Bundabzugswagen gedrückt wird. Das Verfahren ermöglicht die Sicherung eines Coil mittels einer Sicherungsschlinge mit den oben bereits genannten Vorteilen.

Entsprechend oben bereits genannten Ausgestaltungen der erfindungsgemäßen Vorrichtung wird auch bei dem Verfahren vorzugsweise wenigstens ein Schlingenende der Sicherungsschlinge an dem Bundabzugswagen verankert, und/oder die Sicherungsschlinge wird zum Zusammenhalten des Coil und zum Andrücken des Coil auf den Bundabzugswagen mittels wenigstens einer am Bundabzugswagen angeordneten Spannvorrichtung gespannt, und/oder die Sicherungsschlinge wird in einem Führungsrahmen geführt, wobei der Führungsrahmen vorzugsweise während des Transports des Coil auf dem Bundabzugswagen an den Bundabzugswagen gekoppelt und mit dem Bundabzugswagen mitbewegt wird.

Ferner wird der Coil mittels des Bundabzugswagens von der Haspelstation vorzugsweise zu einer Bindestation, in der Bindebänder zum Zusammenhalten des Coil um den Coil gelegt werden, transportiert.

Die erfindungsgemäße Sicherung eines Coil mittels einer Sicherungsschlinge ist insbesondere für das Binden des Coil vorteilhaft, da die Sicherungsschlinge an dem Umfang des Coil wenig Platz, insbesondere weniger Platz als ein Niederhaltearm, einnimmt und damit das Binden des Coil erleichtert und vereinfacht.

Dabei wird vorzugsweise eine Mindestanzahl von Bindebändern vorgegeben und die Sicherungsschlinge wird in der Bindestation von dem Coil gelöst, nachdem die Mindestanzahl von Bindebändern um den Coil gelegt ist.

Dadurch wird vorteilhaft ermöglicht, die Sicherungsschlinge erst dann zu lösen, wenn der Coil durch eine geeignet gewählte Mindestanzahl von Bindebändern gegen ein Aufspringen gesichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Seitenansicht eines auf einem Haspeldorn zu einem Coil aufgewickelten Metallbandes und einer Vorrichtung zum Zusammenhalten und Transportieren des Coil mit einem Bundabzugswagen und einem von dem Bundabzugswagen entkoppelten Führungsrahmen einer Sicherungsschlinge,
FIG 2 eine perspektivische Seitenansicht einer Sicherungsschlinge in einem Führungsrahmen und Führungsrahmenschienen für den Führungsrahmen,
FIG 3 eine perspektivische Frontansicht eines Führungsrahmens für eine Sicherungsschlinge,
FIG 4 eine Seitenansicht eines auf einem Haspeldorn zu einem Coil aufgewickelten Metallbandes und einer Vorrichtung zum Zusammenhalten und Transportieren des Coil mit einem Bundabzugswagen und einem an den Bundabzugswagen gekoppelten Führungsrahmen einer Sicherungsschlinge,
FIG 5 eine lösbare Kopplung eines Führungsrahmens an einen Bundabzugswagen,
FIG 6 eine Frontansicht einer Vorrichtung zum Zusammenhalten und Transportieren eines Coil mit einem Bundabzugswagen und einem an den Bundabzugswagen gekoppelten Führungsrahmen und einer um den Coil gelegten Sicherungsschlinge,
FIG 7 eine perspektivische Darstellung eines Coil, einer um den Coil gelegten Sicherungsschlinge und einen Führungsrahmen der Sicherungsschlinge,
FIG 8 eine Fixierungseinheit zum lösbaren Fixieren eines Schlingenendes einer Sicherungsschlinge an einem Führungsrahmen oder einer Spannvorrichtung, und
FIG 9 eine Seitenansicht eines Haspeldorns und einer von dem Haspeldorn in eine Bindestation bewegten Vorrichtung zum Zusammenhalten und Transportieren des Coil mit einem Bundabzugswagen und einem an den Bundabzugswagen gekoppelten Führungsrahmen einer Sicherungsschlinge.

Einander entsprechende Teile sind in allen Figuren mit den gleichen Bezugszeichen versehen.

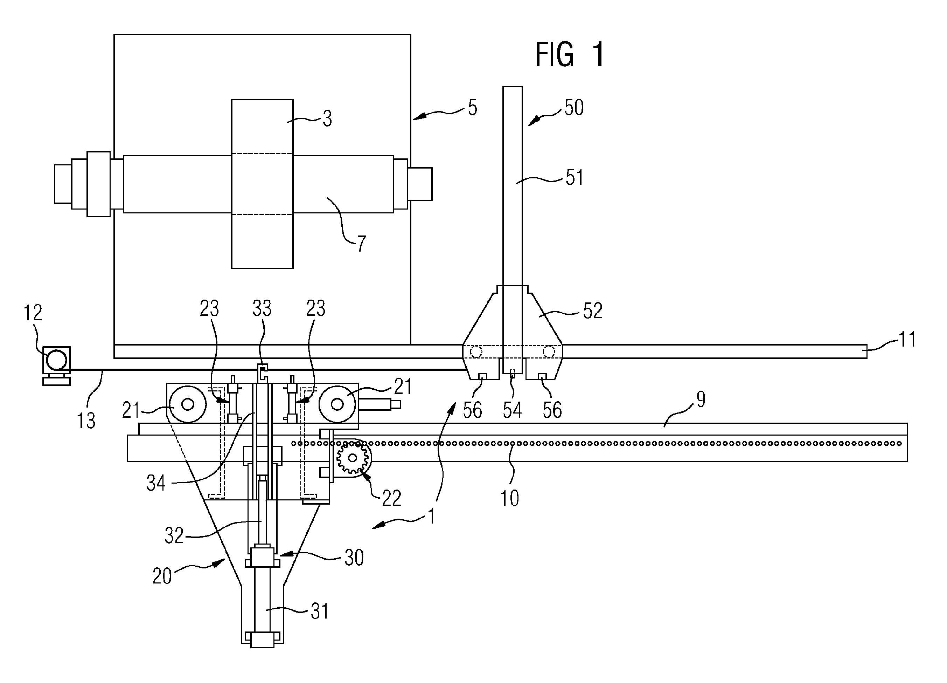

Figur 1 zeigt in einer Seitenansicht eine Vorrichtung 1 zum Zusammenhalten und Transportieren eines zu einem Coil 3 aufgewickelten Metallbandes nach dessen Aufwickeln in einer Haspelstation 5. Dabei ist das Metallband um einen Haspeldorn 7 der ansonsten nicht näher dargestellten Haspelstation 5 gewickelt.

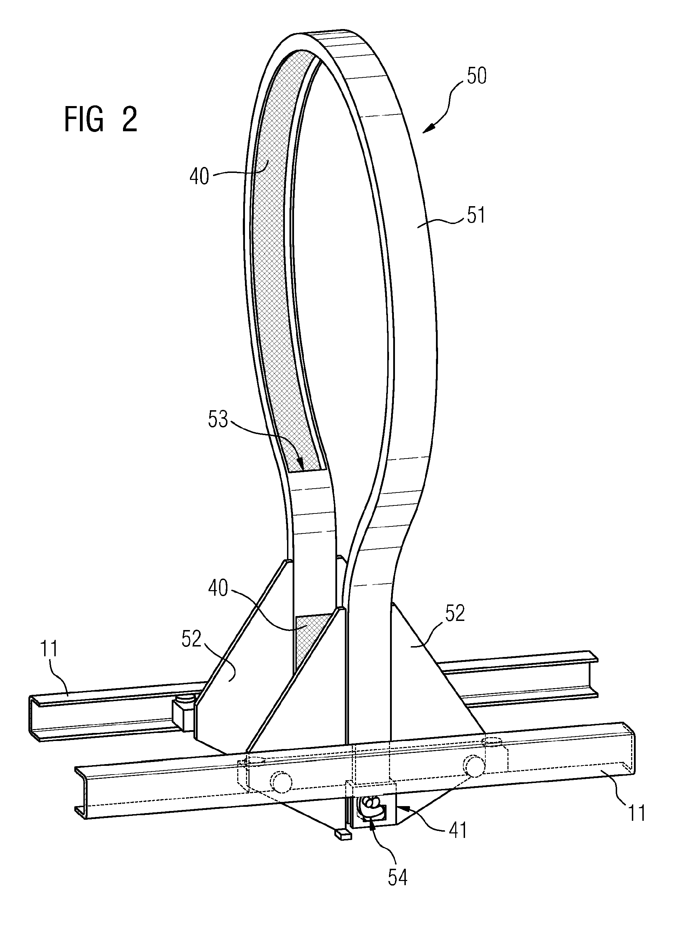

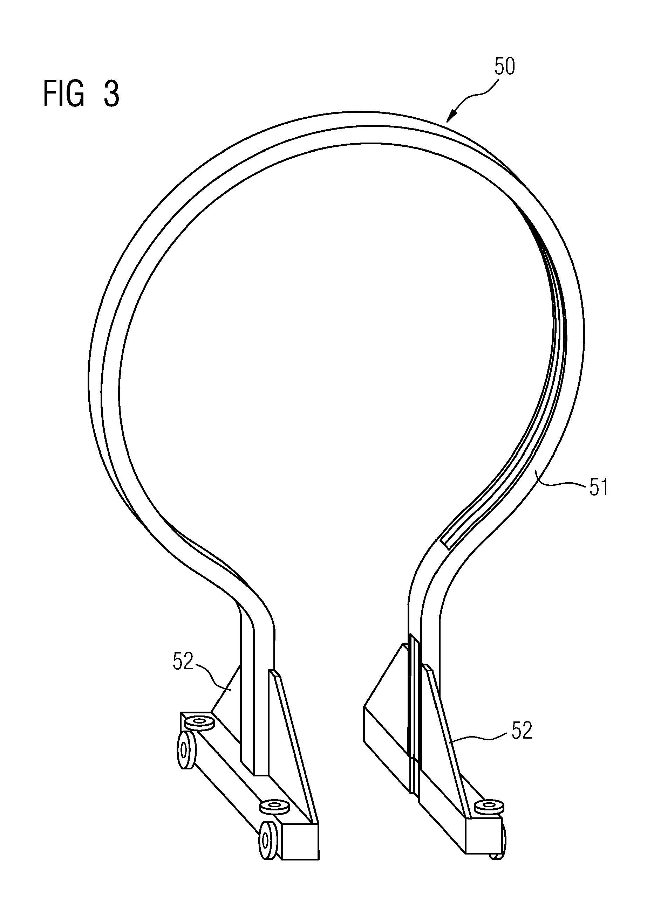

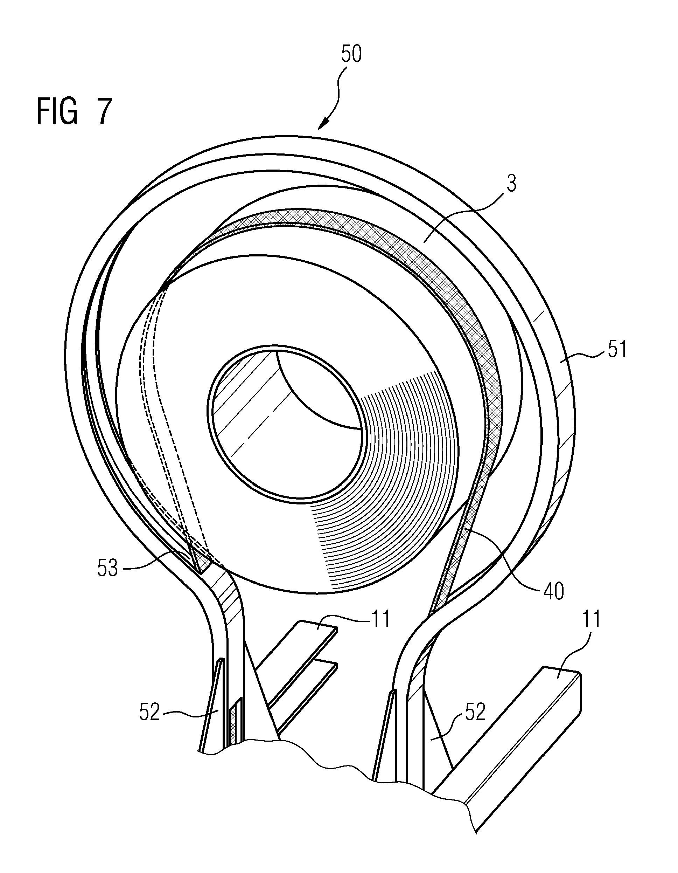

Die Vorrichtung 1 zum Zusammenhalten und Transportieren des Coil 3 umfasst einen Bundabzugswagen 20 zum Aufnehmen des Coil 3 in der Haspelstation 5 und Transportieren des Coil 3 aus der Haspelstation 5, und eine Bundsicherungsvorrichtung, die dazu ausgebildet ist, eine in Figur 1 nicht sichtbare Sicherungsschlinge 40 (siehe Figur 2 und Figur 7) teilumfänglich fest um den Coil 3 zu legen, so dass der Coil 3 vor und während des Transports auf dem Bundabzugswagen 20 mittels der Sicherungsschlinge 40 zusammengehalten und auf den Bundabzugswagen 20 gedrückt wird. Die Sicherungsschlinge 40 ist in einem Führungsrahmen 50 (siehe Figur 2 und Figur 3) geführt.

Der Bundabzugswagen 20 weist Bundabzugswagenräder 21 auf, über die er auf Bundabzugswagenschienen 9 bewegbar ist, beispielsweise mittels eines hydraulischen Zahnstangenantriebs 22 entlang einer Zahnstange 10.

Der Führungsrahmen 50 ist in zu den Bundabzugswagenschienen 9 parallelen Führungsrahmenschienen 11 bewegbar, beispielsweise mittels einer Seilwinde 12 über einen Seilzug 13.

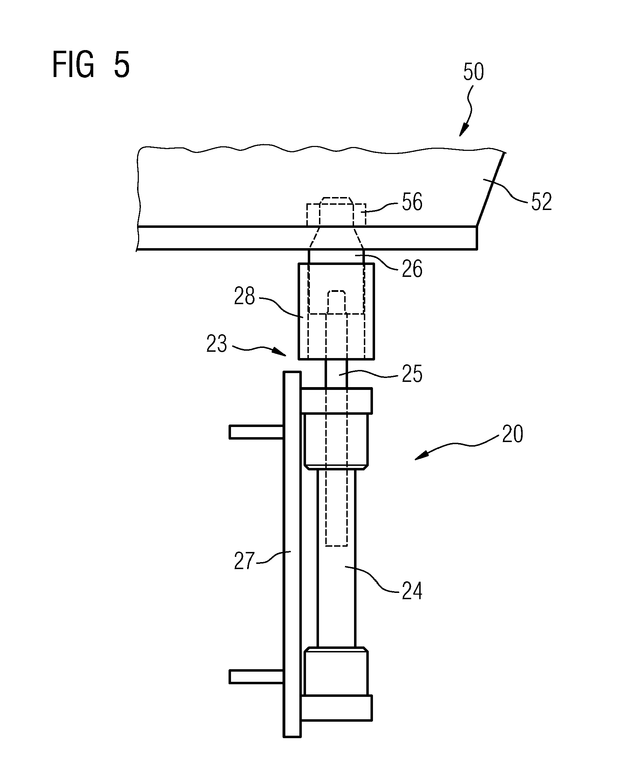

Figur 1 zeigt außerdem zwei unten anhand von Figur 5 näher beschriebene Kopplungseinheiten 23 zu einer lösbaren Kopplung des Führungsrahmens 50 an den Bundabzugswagen 40 sowie eine Spannvorrichtung 30 zum Spannen der Sicherungsschlinge 40. Die Spannvorrichtung 30 umfasst einen ersten Hydraulikantrieb mit einem ersten Hydraulikzylinder 31 und einem in dem ersten Hydraulikzylinder 31 geführten ersten Kolben 32, ein Hakenelement 33 und eine den ersten Kolben 32 mit dem Hakenelement 33 verbindende Verbindungsstange 34. Wie unten näher beschrieben wird, kann ein Schlingenende 41 der Sicherungsschlinge 40 an dem Hakenelement 33 Bundabzugswagen 20 verankert werden und danach mittels des ersten Hydraulikzylinders 31 zum Spannen der Sicherungsschlinge 40 nach unten gezogen werden.

In Figur 1 befinden sich der Bundabzugswagen 20 und der Führungsrahmen 50 in ihren Ausgangspositionen. Der Bundabzugswagen 20 befindet sich dabei unterhalb des Coil 3, der Führungsrahmen 50 befindet sich vor dem Haspeldorn 7.
Figur 2 zeigt eine perspektivische Seitenansicht einer Sicherungsschlinge 40 in einem Führungsrahmen 50 und Führungsrahmenschienen 11 für den Führungsrahmen 50.
Figur 3 zeigt eine perspektivische Frontansicht eines Führungsrahmens 50.

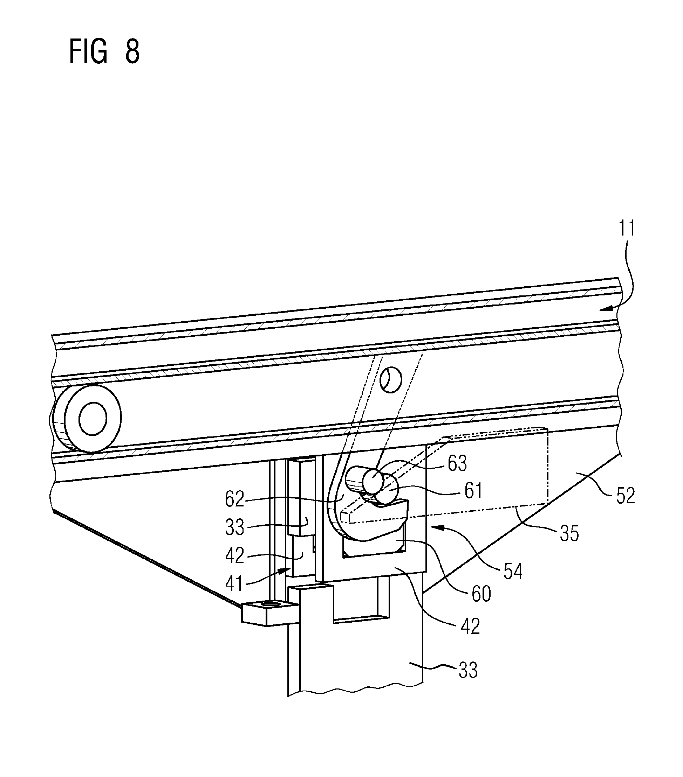

Ein oberer Teil des Führungsrahmens 50 hat die Form eines offenen Führungsrings 51. Der untere Teil des Führungsrahmens 50 wird von zwei Fußabschnitten 52 gebildet, die sich jeweils an ein Ende des Führungsrings 51 anschließen und jeweils in einer Führungsrahmenschiene 11 geführt sind. Die Sicherungsschlinge 40 ist im Bereich des Führungsrings 51 an dessen Innenseite geführt. In den Übergangsbereichen zwischen dem Führungsring 51 und den beiden Fußabschnitten 52 ist die Sicherungsschlinge 40 jeweils durch einen Führungskanal 53 in dem Führungsrahmen 50 geführt. Im Bereich jedes Fußabschnitts 52 ist die Sicherungsschlinge 40 von einem Ausgang eines Führungskanals 53 zu einer unten anhand von Figur 8 näher beschriebenen Fixierungseinheit 54 geführt, mittels derer ein Schlingenende 41 der Sicherungsschlinge 40 an dem jeweiligen Fußabschnitt 52 lösbar fixiert ist.

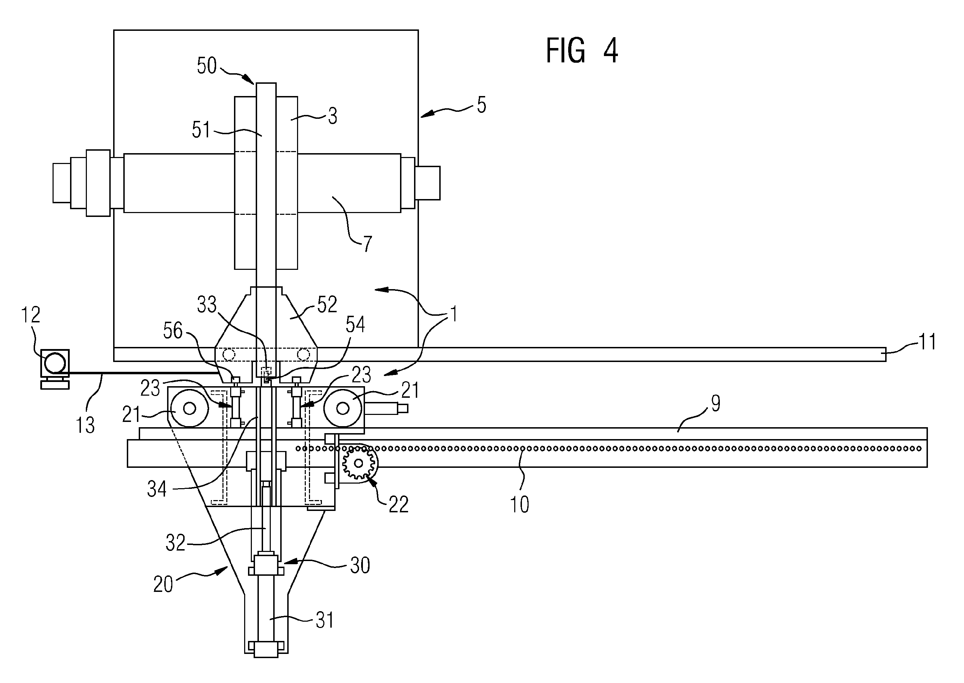

Figur 4 zeigt in einer Seitenansicht den Bundabzugswagen 20 und den Führungsrahmen 50 in Positionen zu einer Übergabe des Coil 3 von dem Haspeldorn 7 auf den Bundabzugswagen 20. Der Bundabzugswagen 20 befindet sich dabei immer noch in seiner in Figur 1 gezeigten Ausgangsposition unterhalb des Coil 3. Der Führungsrahmen 50 wurde aus seiner in Figur 1 gezeigten Ausgangsposition zu dem Bundabzugswagen 20 bewegt, so dass der Führungsring 51 um den Coil 3 herum verläuft. Ferner ist der Führungsrahmen 50 mittels der Kopplungseinheiten 23 in der anhand von Figur 5 beschriebenen Weise an den Bundabzugswagen 20 gekoppelt.

Figur 5 zeigt die Kopplung des Führungsrahmens 50 an den Bundabzugswagen 20 mittels einer Kopplungseinheit 23. Die Kopplungseinheit 23 umfasst einen zweiten Hydraulikzylinder 24, einen in dem zweiten Hydraulikzylinder 24 geführten zweiten Kolben 25 und ein mit dem zweiten Kolben 25 verbundenes Bolzenelement 26. Der zweite Hydraulikzylinder 24 ist mittels einer Halterung 27 an dem Bundabzugswagen 20 befestigt. Zur Kopplung des Führungsrahmens 50 an den Bundabzugswagen 20 wird das Bolzenelement 26 mittels des zweiten Hydraulikzylinders 24 und des zweiten Kolbens 25 in eine zu dem Bolzenelement 26 korrespondierende Bolzenaufnahme 56 in dem Führungsrahmen 50 eingefahren. Das Bolzenelement 26 wird in einer Bolzenführung 28 geführt. Vorzugsweise sind mehrere, beispielsweise insgesamt vier, derartige Kopplungseinheiten 23 und dazu korrespondierende Bolzenaufnahmen 56 vorgesehen.

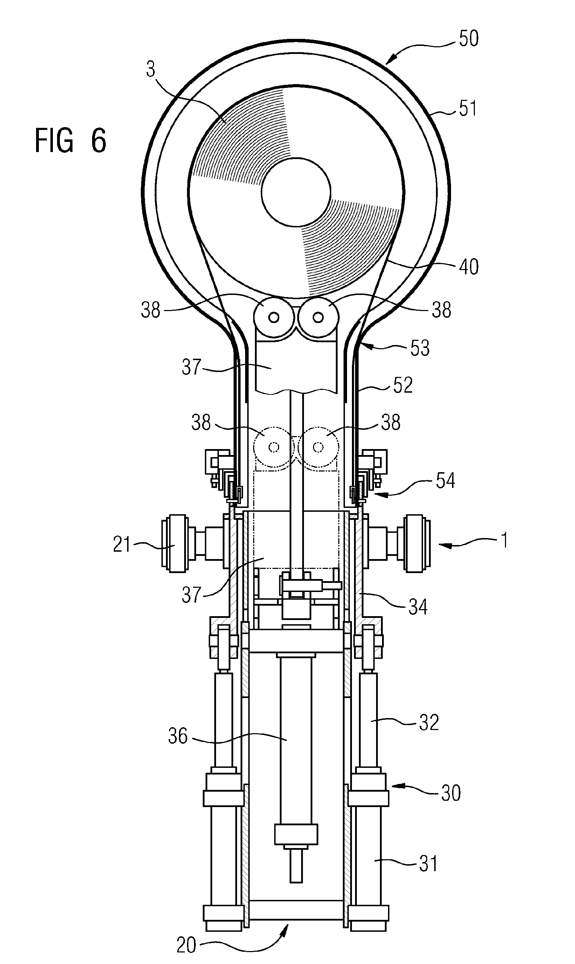

Figur 6 zeigt die Vorrichtung 1 zum Zusammenhalten und Transportieren des Coil 3 in einer Frontansicht, wenn die Sicherungsschlinge 40 fest um den Coil 3 gelegt ist. Bevor die Sicherungsschlinge 40 gespannt wird, werden zunächst ein bewegbarer Lagerungszylinder 37 des Bundabzugswagens 20 und auf dem Lagerungszylinder 37 angeordnete Lagerungsrollen 38 mittels eines dritten Hydraulikzylinders 36 des Bundabzugswagens 20 an den Coil 3 herangefahren, so dass die Lagerungsrollen 38 an dem Umfang des Coil 3 anliegen und den Coil 3 gegen den Haspeldorn 7 drücken. Danach wird die Sicherungsschlinge 40 mittels zweier Spannvorrichtungen 30 gespannt, indem die Schlingenenden 41 der Sicherungsschlinge 40 jeweils mittels des ersten Hydraulikzylinders 31 einer Spannvorrichtung 30 nach unten gezogen werden, siehe dazu Figur 8. Durch das Spannen der Sicherungsschlinge 40 wird der Coil 3 zusammengehalten und auf die Lagerungsrollen 38 gedrückt. Nach dem Spannen der Sicherungsschlinge 40 wird der Haspeldorn 7 zusammengezogen, so dass sich sein Durchmesser verkleinert, und der Coil 3 wird mittels der Vorrichtung 1 in dem in Figur 6 dargestellten Zustand von dem Haspeldorn 7 abgezogen und aus der Haspelstation 5 heraus transportiert.

Figur 7 zeigt in einer perspektivischen Darstellung den Coil 3 und die um den Coil 3 gespannte Sicherungsschlinge 40 in dem Führungsrahmen 50.

Figur 8 zeigt eine Fixierungseinheit 54 zum lösbaren Fixieren eines Schlingenendes 41 der Sicherungsschlinge 40 an einem Fußabschnitt 52 des Führungsrahmens oder einer Spannvorrichtung 30 des Bundabzugswagens 20. Das Schlingenende 41 weist zwei zueinander parallele Endstücke 42 mit jeweils einem Loch auf. Durch die Löcher ist ein die Endstücke 42 verbindender Verbindungsbolzen 60 geführt, der einen zu der Außenseite des Fußabschnittes 52 abstehenden Haltedorn 61 aufweist. Die Fixierungseinheit 54 weist ferner ein hakenförmiges Hebelelement 62 auf, das schwenkbar an dem Fußabschnitt 52 gelagert ist und in der in Figur 8 dargestellten Position den Haltedorn 61 hält, so dass das Schlingenende 41 an dem Fußabschnitt 52 des Führungsrahmen 50 fixiert wird. Das Hebelelement 62 weist einen zu der Außenseite des Fußabschnittes 52 abstehenden Betätigungsdorn 63 auf, der mit einem an den Führungsrahmenschienen 11 angeordneten Keil 35 zusammenwirkt. Wenn der Führungsrahmen 50 über den Bundabzugswagen 20 geschoben wird, wird der Verbindungsbolzen 60 in das Hakenelement 33 einer Spannvorrichtung 30 des Bundabzugswagens 20 geführt und der Keil 35 schiebt sich unter den Betätigungsdorn 63 und drückt diesen nach oben, so dass das Hebelelement 62 von dem Haltedorn 61 des Verbindungsbolzens 60 wegschwenkt und den Haltedorn 61 freigibt. Dadurch wird das Schlingenende 41 von dem Führungsrahmen 50 gelöst und an das Hakenelement 33 gekoppelt, so dass es durch die Spannvorrichtung 30, der das Hakenelement 33 angehört, zum Spannen der Sicherungsschlinge 40 bewegt werden kann. Vorzugsweise sind auf diese Weise beide Schlingenenden 41 der Sicherungsschlinge 40 gleichzeitig an jeweils eine Spannvorrichtung 30 des Bundabzugswagens 20 koppelbar, so dass die Sicherungsschlinge 40 durch gleichzeitiges Ziehen an ihren beiden Schlingenenden 41 gespannt werden kann.

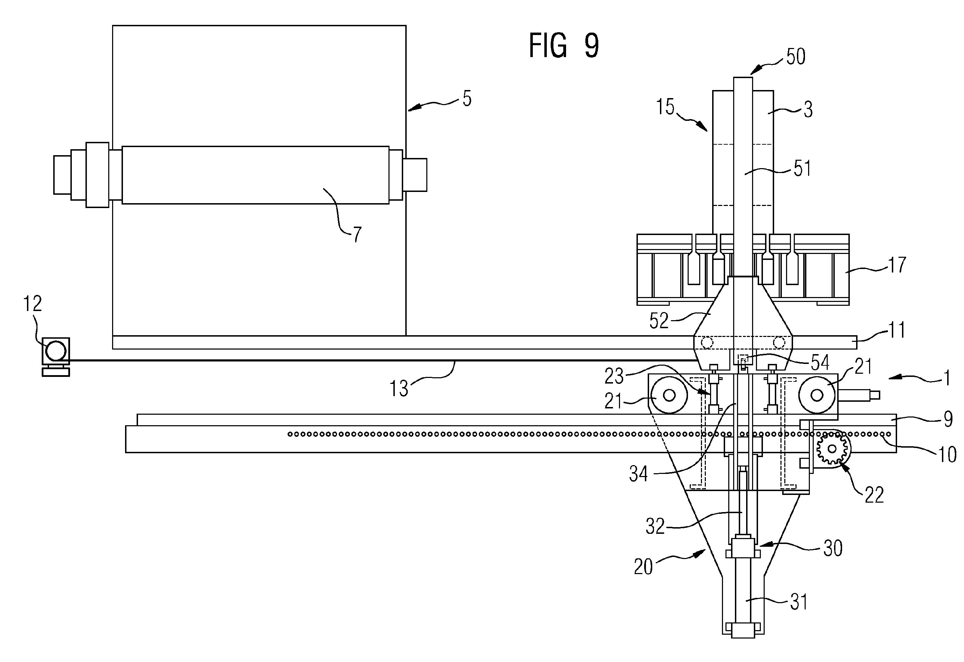

Figur 9 zeigt die Vorrichtung 1 in ihrer Endposition, nachdem der Coil 3 von der Haspelstation 5 zu einer Bindestation 15 transportiert wurde. In der Bindestation 15 werden mittels einer Bindevorrichtung 17 Bindebänder zum Zusammenhalten des Coil 3 um den Coil 3 gelegt. Dazu wird eine Mindestanzahl von Bindebändern vorgegeben und die Sicherungsschlinge 40 wird in der Bindestation von dem Coil 3 gelöst, nachdem die Mindestanzahl von Bindebändern um den Coil 3 gelegt ist.

Anschließend werden der Führungsrahmen 50 und der Bundabzugswagen 20 voneinander entkoppelt und in die in Figur 1 gezeigten Ausgangspositionen gefahren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Vorrichtung zum Zusammenhalten und Transportieren eines Coil
- 3: Coil
- 5: Haspelstation
- 7: Haspeldorn
- 9: Bundabzugswagenschiene
- 10: Zahnstange
- 11: Führungsrahmenschiene
- 12: Seilwinde
- 13: Seilzug
- 15: Bindestation
- 17: Bindevorrichtung
- 20: Bundabzugswagen
- 21: Bundabzugswagenrad
- 22: Zahnstangenantrieb
- 23: Kopplungseinheit
- 24: zweiter Hydraulikzylinder
- 25: zweiter Kolben
- 26: Bolzenelement
- 27: Halterung
- 28: Bolzenführung
- 30: Spannvorrichtung
- 31: erster Hydraulikzylinder
- 32: erster Kolben
- 33: Hakenelement
- 34: Verbindungsstange
- 35: Keil
- 36: dritter Hydraulikzylinder
- 37: Lagerungszylinder
- 38: Lagerungsrolle
- 40: Sicherungsschlinge
- 41: Schlingenende
- 42: Endstück
- 50: Führungsrahmen
- 51: Führungsring
- 52: Fußabschnitt
- 53: Führungskanal
- 54: Fixierungseinheit
- 56: Bolzenaufnahme
- 60: Verbindungsbolzen
- 61: Haltedorn
- 62: Hebelelement
- 63: Betätigungsdorn

## Patentansprüche

1. Vorrichtung (1) zum Zusammenhalten und Transportieren eines zu einem Coil (3) aufgewickelten Metallbandes nach dessen Aufwickeln in einer Haspelstation (5), umfassend
- einen Bundabzugswagen (20) zum Aufnehmen des Coil (3) in der Haspelstation (5) und Transportieren des Coil (3) aus der Haspelstation (5),
- und eine Bundsicherungsvorrichtung, die dazu ausgebildet ist, eine Sicherungsschlinge (40) teilumfänglich fest um den Coil (3) zu legen, so dass der Coil (3) mittels der Sicherungsschlinge (40) zusammengehalten und auf den Bundabzugswagen (20) gedrückt wird.

2. Vorrichtung (1) nach Anspruch 1,
**dadurch gekennzeichnet, dass** der Bundabzugswagen (20) wenigstens eine Verankerung für ein Schlingenende (41) der Sicherungsschlinge (40) aufweist.

3. Vorrichtung (1) nach einem der vorhergehenden Ansprüche,
**dadurch gekennzeichnet, dass** der Bundabzugswagen (20) wenigstens eine Spannvorrichtung (30) zum Spannen der Sicherungsschlinge (40) aufweist.

4. Vorrichtung (1) nach Anspruch 3,
**gekennzeichnet durch** eine Spannvorrichtung (30) mit einem Hydraulikzylinder (31) oder einer Winde, mittels dessen bzw. mittels derer ein Schlingenende (41) der
Sicherungsschlinge (40) zum Spannen der
Sicherungsschlinge (40) bewegbar ist.

5. Vorrichtung (1) nach einem der vorhergehenden Ansprüche,
**dadurch gekennzeichnet, dass** die Bundsicherungsvorrichtung einen Führungsrahmen (50) für die Sicherungsschlinge (40) aufweist.

6. Vorrichtung (1) nach Anspruch 5,
**gekennzeichnet durch** wenigstens eine Kopplungseinheit (23) zu einer lösbaren Kopplung des Führungsrahmens (50) an den Bundabzugswagen (20).

7. Vorrichtung (1) nach Anspruch 5 oder 6,
**dadurch gekennzeichnet, dass** der Führungsrahmen (50) schienengeführt bewegbar ist.

8. Vorrichtung (1) nach einem der vorhergehenden Ansprüche,
**dadurch gekennzeichnet, dass** die Sicherungsschlinge (40) als ein Stahlband oder eine Kette oder ein beweglicher Mechanismus oder eine sonstige zugbeanspruchte Vorrichtung ausgebildet ist.

9. Verfahren zum Zusammenhalten und Transportieren eines zu einem Coil (3) aufgewickelten Metallbandes nach dessen Aufwickeln in einer Haspelstation (5), wobei
- der Coil (3) in der Haspelstation (5) von einem Bundabzugswagen (20) aufgenommen und mittels des Bundabzugswagens (20) aus der Haspelstation (5) transportiert wird
- und eine Sicherungsschlinge (40) teilumfänglich fest um den Coil (3) gelegt wird, so dass der Coil (3) vor und während des Transports auf dem Bundabzugswagen (20) mittels der Sicherungsschlinge (40) zusammengehalten und auf den Bundabzugswagen (20) gedrückt wird.

10. Verfahren nach Anspruch 9,
**dadurch gekennzeichnet, dass** wenigstens ein
Schlingenende (41) der Sicherungsschlinge (40) an dem Bundabzugswagen (20) verankert wird.

11. Verfahren nach Anspruch 9 oder 10,
**dadurch gekennzeichnet, dass** die Sicherungsschlinge (40) zum Zusammenhalten des Coil (3) und zum Andrücken des Coil (3) auf den Bundabzugswagen (20) mittels wenigstens einer am Bundabzugswagen (20) angeordneten Spannvorrichtung (30) gespannt wird.

12. Verfahren nach einem der Ansprüche 9 bis 11,
**dadurch gekennzeichnet, dass** die Sicherungsschlinge (40) in einem Führungsrahmen (50) geführt wird.

13. Verfahren nach Anspruch 12,
**dadurch gekennzeichnet, dass** der Führungsrahmen (50) während des Transports des Coil (3) auf dem Bundabzugswagen (20) an den Bundabzugswagen (20) gekoppelt und mit dem Bundabzugswagen (20) mitbewegt wird.

14. Verfahren nach einem der Ansprüche 9 bis 13,
**dadurch gekennzeichnet, dass** der Coil (3) mittels des Bundabzugswagens (20) von der Haspelstation (5) zu einer Bindestation (15), in der Bindebänder zum Zusammenhalten des Coil (3) um den Coil (3) gelegt werden, transportiert wird.

15. Verfahren nach Anspruch 14,
**dadurch gekennzeichnet, dass** eine Mindestanzahl von Bindebändern vorgegeben wird und die Sicherungsschlinge (40) in der Bindestation von dem Coil (3) gelöst wird, nachdem die Mindestanzahl von Bindebändern um den Coil (3) gelegt ist.
